# DEMANDE DE BREVET EUROPEEN

(11) **EP 2 922 042 A1**
(43) Date de publication de la demande: **23.09.2015**
(21) Numéro de dépôt: 14161019.6
(22) Date de dépôt: 21.03.2014
(51) Int. Cl.: G08G 1/04, G08G 1/042, G08G 1/14, G01S 13/93

(54) **Procédé et système de gestion d'une aire de stationnement**

(71) Demandeur: SP Financial Holding SA, 1763 Granges-Paccot (CH)
(72) Inventeur: Schick, Philippe, 1008 Prilly (CH); Schick, Patrice, 1053 Cugy (CH)
(74) Mandataire: BOVARD AG

(57) **Abrégé**

L'invention a trait à un procédé de gestion d'une aire de stationnement, dans lequel on utilise des moyens électroniques reliés à un détecteur d'occupation pour savoir si une place de stationnement est occupée ou libre, ce procédé ayant pour particularité de comprendre les étapes consistant à :
- utiliser au moins un deuxième détecteur et à
- utiliser à la fois la mesure de ce deuxième détecteur et celle du premier détecteur en vue d'améliorer la fiabilité de la détection.

L'invention se rapporte également à un système de gestion d'une aire de stationnement apte à mettre en oeuvre le procédé selon l'invention.

## Description

L'invention concerne un procédé de gestion d'une aire de stationnement destinée à des véhicules, en particulier des voitures. Egalement, la présente invention se rapporte à un système apte à mettre en oeuvre un tel procédé.

### Arrière-plan de l'invention

La demande internationale publiée sous le n° WO 93/01567 (ou EP 547 197) propose un procédé et un système de gestion d'un parking, mettant en oeuvre des détecteurs individuels associés chacun à une place de parc. Comme cela est indiqué aux lignes 16 à 28 de ce document, il peut s'agir de détecteurs photo-électriques, à infra-rouge, capacitifs, inductifs ou d'un autre type et de préférence du type radar à ultrasons. Ces détecteurs peuvent être placés sous la chaussée, sur un mur ou une colonne située derrière ou à côté de la place à contrôler ou sous le plafond, afin de détecter l'occupation ou la disponibilité des places de parc respectives.

Plus récente, la demande internationale publiée sous le numéro WO 2006/042981 (ou EP 1 834 316) a pour objet un dispositif et un procédé de gestion de parking faisant appel à des détecteurs à ultrasons ou infrarouges. Ces détecteurs sont décrits à la page 6 de ce document, chacun d'entre eux est situé au-dessus de la place de parking qu'il surveille.

L'inconvénient principal de ces procédés et systèmes est qu'ils n'ont recours qu'à un seul détecteur pour chaque place de stationnement. De ce fait, la détection n'est pas fiable et il peut arriver qu'une place de stationnement soit indiquée comme étant occupée alors qu'elle ne l'est pas, et vice versa. Ceci peut créer la confusion dans les aires de stationnement ou même provoquer les accidents.

### Exposé sommaire de l'invention

Le but majeur de l'invention est de proposer un procédé et un système de gestion de places de stationnement ne présentant pas les inconvénients précités.

Selon l'invention, ce but est atteint par le procédé selon le point 1 suivant :
1. Procédé de gestion d'une aire de stationnement, dans lequel on utilise des moyens électroniques reliés à un détecteur d'occupation pour savoir si une place de stationnement est occupée ou libre, ce procédé ayant ceci de particulier qu'il comprend les étapes consistant à :
   - utiliser au moins un deuxième détecteur et à
   - utiliser à la fois la mesure de ce deuxième détecteur et celle du premier détecteur en vue d'améliorer la fiabilité de la détection.

Ainsi, du fait de l'utilisation d'un deuxième détecteur au moins, la détection est plus fiable, ce qui apporte un certain nombre d'avantages :
le taux d'occupation du parking est plus élevé, ce qui augmente sa rentabilité,
les véhicules passent moins de temps à rechercher une place libre, ce qui réduit leur consommation de carburant et, partant, la pollution atmosphérique et la production de gaz à effet de serre sont également réduites,
les chauffeurs perdent moins de temps à garer leur véhicule, ils peuvent donc consacrer plus de temps à d'autres activités et, éventuellement, s'énervent moins et se disputent moins avec les autres passagers du véhicule.

Des caractéristiques avantageuses du procédé selon l'invention sont indiquées en référence aux modes de réalisation préférés suivants :
- Mode de réalisation dans lequel un signal d'occupation est émis par les moyens électroniques lorsque les mesures des premier et deuxième détecteurs sont toutes les deux positives.
- Mode de réalisation dans lequel les moyens électroniques combinent les mesures des premier et deuxième détecteurs pour décider d'émettre ou non un signal d'occupation.
- Mode de réalisation dans lequel les détecteurs effectuent leurs mesures simultanément.
- Mode de réalisation dans lequel les détecteurs effectuent leurs mesures à tour de rôle.
- Mode de réalisation dans lequel les mesures sont continues.
- Mode de réalisation dans lequel les mesures sont discontinues.

L'invention a aussi pour objet un système de gestion d'une aire de stationnement selon le point 2 suivant :
2. Système de gestion d'une aire de stationnement, comprenant des détecteurs d'occupation dont chacun est associé à une place de stationnement et connecté à des moyens électroniques, ce système ayant la particularité de comprendre en outre des deuxièmes détecteurs d'occupation associés chacun à une place de stationnement déjà surveillée par un premier détecteur d'occupation, ces deuxièmes détecteurs d'occupation étant également reliés auxdits moyens électroniques et ces moyens électroniques étant aptes à utiliser à la fois les mesures des premiers détecteurs et celles des deuxièmes détecteurs en vue d'améliorer la fiabilité des détections.

Des caractéristiques avantageuses du procédé selon l'invention sont indiquées en référence aux modes de réalisation préférés suivants :
- Mode de réalisation dans lequel chaque premier détecteur balaie une première zone d'une place de stationnement et chaque deuxième détecteur balaie une deuxième zone de la même place de stationnement, cette deuxième zone étant différente de la première zone.
- Mode de réalisation dans lequel les zones de balayage des premier et deuxième détecteurs sont des plages angulaires, tronconiques ou coniques.
- Mode de réalisation dans lequel lesdites plages angulaires sont complémentaires.
- Mode de réalisation dans lequel les plages angulaires sont comprises entre 20 et 70 degrés, de préférence entre 30 et 60 degrés.
- Mode de réalisation dans lequel l'aire de stationnement est couverte et les premiers et deuxièmes détecteurs sont situés au-dessus de la place de stationnement qu'ils surveillent.
- Mode de réalisation dans lequel l'aire de stationnement est à ciel ouvert et les premiers et deuxièmes détecteurs sont disposés sur le sol ou dans le sol, totalement ou partiellement.
- Mode de réalisation comprenant des détecteurs à plage de balayage variable en position et/ou dimension et/ou des détecteurs mobiles ayant des mouvements continus ou intermittents et/ou des haut-parleurs et/ou un système de paiement et/ou un système de guidage des véhicules.

### Brève description des dessins

D'autres caractéristiques et avantages de l'invention vont maintenant être décrits en détail dans l'exposé suivant qui est donné en référence aux figures annexées, lesquelles représentent schématiquement :
- figure 1 : un premier mode de réalisation du dispositif selon l'invention ;
- figure 2 : un second mode de réalisation du dispositif selon l'invention ;
- figure 3 : un troisième mode de réalisation du dispositif selon l'invention ; et
- figure 4 : un quatrième mode de réalisation du dispositif selon l'invention.

### Exposé détaillé de l'invention

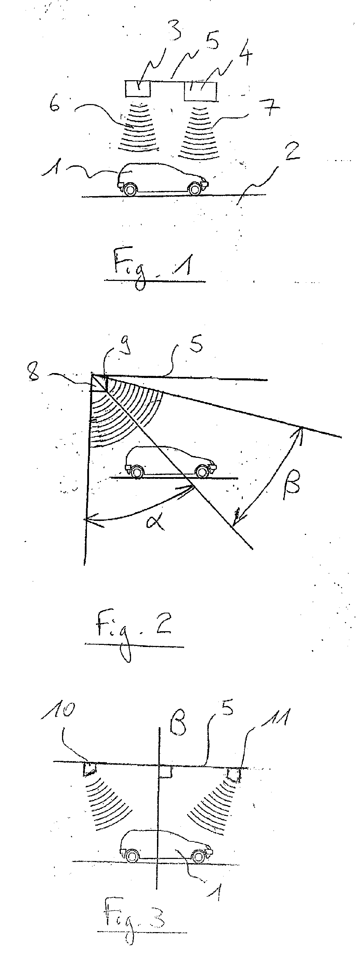

Un premier mode de réalisation du système de gestion d'aire de stationnement selon l'invention est représenté de manière générale sur la figure 1 où l'on peut voir un véhicule 1 à l'arrêt sur une aire de stationnement ou parking 2.

Comme on peut le voir sur cette figure, la place de stationnement occupée par le véhicule est surveillée par deux détecteurs d'occupation 3 et 4. Ces derniers sont fixés au plafond 5. Bien entendu, il est également imaginable de placer les détecteurs d'occupation 3 et 4 au-dessus du véhicule 1 d'une autre manière (p.ex. de les suspendre), notamment lorsque le plafond 5 est situé à une hauteur très élevée. Bien que l'on puisse imaginer que les détecteurs 3 et 4 aient la même zone de couverture ou balayage, de préférence, leurs plages de balayage 6 et 7 sont distinctes et s'étendent côte à côte de manière sensiblement parallèle.

Sur la figure 2 est représenté un deuxième mode de réalisation de l'invention dans lequel les deux détecteurs 8 et 9 fixés au plafond 5 (ou suspendus), regroupés dans un même boîtier et ils émettent leurs signaux de surveillance suivant des angles α, β distincts et complémentaires. Comme facilement visible sur la figure 2, le boîtier qui regroupe les deux détecteurs 8 et 9 peut de manière avantageuse être positionné à une extrémité de l'espace formé par l'aire de stationnement 2. Cet emplacement du boîtier permet à la fois une bonne détection des véhicules et une bonne visibilité du boîtier de la part des utilisateurs du parking. En combinaison avec les indicateurs (occupé/non occupé) intégrés dans le boîtier, ce mode de réalisation de la présente invention offre une multitude d'avantages par rapport aux solutions existantes.

Sur la figure 3 est représenté un troisième mode de réalisation de l'invention dans lequel les deux détecteurs 10 et 11 sont fixés au plafond (ou suspendus, comme mentionné plus haut) à distance l'un de l'autre et ils émettent leurs signaux de surveillance suivant des plages angulaires distinctes, à orientations différentes et sensiblement symétriques par rapport à une bissectrice B perpendiculaire au plafond 5 et passant sensiblement par le centre du véhicule 1.

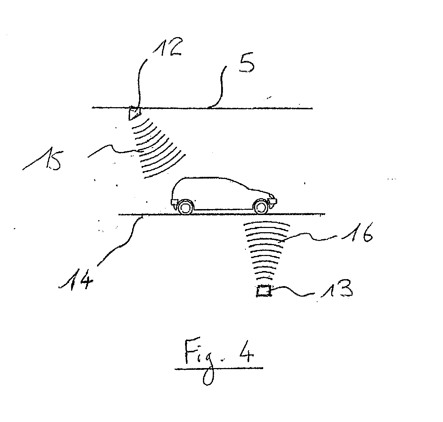

Sur la figure 4 est représenté un quatrième mode de réalisation de l'invention dans lequel le premier détecteur 12 est fixé au plafond 5 (ou suspendu), d'un côté de la place de stationnement, et le deuxième détecteur 13 est enfoui dans le sol 14, d'un autre côté de la place de stationnement. La plage de balayage 15 du premier détecteur 12 s'étend donc vers le bas et la plage de balayage 16 du deuxième détecteur 13 s'étend vers le haut.

Quel que soit le mode de réalisation envisagé, les détecteurs d'occupation sont de type connu, ils peuvent être identiques ou différents et du type photo-électrique, à infra-rouge, capacitif, inductif, laser (rouge, vert, etc.) ou de tout autre type. De préférence, il s'agit de détecteurs à ultra-sons.

Les détecteurs d'occupation font partie d'un système de gestion d'une aire de stationnement selon l'invention, ils sont reliés par tout moyen approprié, comme une liaison filaire, par ondes électromagnétiques (radio, en particulier wifi, etc.), ou sonores (ultra-sons, etc.) à des moyens électroniques (non représentés sur les figures).

Ces moyens électroniques sont destinés à gérer l'ensemble de l'aire de stationnement et ils sont aptes, de préférence, à combiner les mesures des premiers détecteurs d'occupation avec celles des deuxièmes détecteurs afin d'améliorer la fiabilité des détections.

Pour cela, les moyens électroniques font de préférence appel à un algorithme approprié et connu de l'homme du métier, qui tient évidemment compte du type des détecteurs mis en oeuvre et qui est notamment capable d'effectuer une ou plusieurs des opérations suivantes :
- éliminer les signaux parasites, tels que les ondes électromagnétiques émises par un téléphone portable situant par exemple à proximité des détecteurs ou par un éventuel drone de surveillance de l'aire de stationnement ;
- corriger les valeurs mesurées par les détecteurs ;
- faire une moyenne des résultats des mesures des détecteurs sur un période prédéterminée éventuellement ajustable ;
- éliminer des sources sonores parasites (sifflet pour chien de garde, de brigade canine de surveillance ou de brigade anti-drogue, etc.) ;
- tenir compte des variations de température, d'humidité, de mouillage du sol, etc. ; ou
- tenir compte des éventuelles réverbérations ou reflets de toutes sortes.

Dans ce dernier contexte, il est notamment imaginable d'utiliser une première valeur mesurée obtenue avec une place de stationnement non occupée comme référence pour l'évaluation des valeurs mesurées prises pendant l'occupation de cette même place de parking. Ceci permet en particulier aussi de tenir compte d'éventuels obstacles ou objets présents dans la proximité de la place de parking qui créent un écho identique lors de chacune des mesures consécutives.

Les détecteurs peuvent être commandés pour effectuer leurs tests de présence d'un véhicule simultanément, à tour de rôle, ou bien l'un peut commencer sa détection avant l'autre et la terminer avant, etc.

Les mesures de surveillance peuvent être continues ou discontinues.

Les moyens électroniques envoient un signal d'occupation (par exemple en commandant l'allumage d'un feu de signalisation) dans le plus simple des cas, lorsque les tests de détection des premiers et deuxièmes détecteurs sont tous les deux positifs, ou de manière plus complexe, lorsque l'algorithme, après avoir combiné les résultats des mesures de surveillance des deux (ou plus) détecteurs ainsi qu'éventuellement d'autres paramètres parvient à la conclusion que la place de stationnement est occupée.

En ce qui concerne les indicateurs de signalisation (les feux), il s'agit de préférence des lumières LED montées au-dessus de chaque place de stationnement. De manière encore plus préférée, les lumières LED sont montées dans le boîtier d'au moins un des détecteurs.

Aussi, il est possible de prévoir une unité centrale de commande (un serveur central) et des unités d'affichage supplémentaires distribuées dans le parking afin de faciliter le guidage des utilisateurs vers les places toujours non occupées. A cette fin, l'unité centrale de commande reçoit, typiquement via un réseau de communications avec ou sans fil, les informations sur l'occupation des aires de stationnement individuelles. Ces informations sont traitées par l'unité centrale de commande en temps réel, et des informations de guidage sont envoyées aux unités d'affichage pour indiquer aux utilisateurs le chemin à suivre pour joindre rapidement une place de stationnement libre. Les unités d'affichage peuvent être réalisées sous forme des écrans classiques, flèches dynamiques ou d'autres enseignes appropriées.

L'algorithme de détection utilisé fait de préférence une moyenne des résultats des mesures des détecteurs sur un période prédéterminée éventuellement ajustable.

Il peut être prévu que les plages de balayage des détecteurs ne soient pas fixes et varient en position et/ou dimension. Par exemple, les détecteurs peuvent être mobiles et faire des mouvements continus ou intermittents, notamment comme une caméra infrarouge capable de pivoter autour d'un axe vertical et/ou horizontal pour balayer l'ensemble de la place de stationnement.

Bien entendu, le choix du type et de la taille des détecteurs ou capteurs peut être effectué en fonction de la place de stationnement ou du véhicule (voiture grande ou petite, moto,...). Par exemple, on évite d'utiliser des capteurs thermiques si la place de stationnement est prévue pour un véhicule électrique car la température du moteur de ce dernier risque de ne pas être suffisante pour que le véhicule soit détecté.

Le système de gestion d'une aire de stationnement selon l'invention peut coopérer, notamment par le biais de ses moyens électroniques, avec un système informatique et/ou un système de paiement et/ou un système de guidage et/ou un système de contrôle d'occupation des places de stationnement tels que ceux mentionnés dans la demande internationale précitée WO 93/01567.

De même, le système de gestion d'une aire de stationnement selon l'invention peut aussi prévoir que les places de stationnement soient munies chacune d'un haut-parleur, comme le dispositif de gestion de parking mentionné dans la demande internationale précitée WO 2006/042981.

D'une manière générale, l'homme du métier pourra aisément trouver de nombreux compléments techniques dans ces demandes internationales et les incorporer à l'invention. Il va de soi qu'il pourra aussi adapter les systèmes et dispositifs décrits dans ces documents pour qu'ils puissent mettre en oeuvre le procédé selon l'invention. En cela, l'invention consiste en une amélioration notable des solutions antérieures.

## Revendications

1. Procédé de gestion d'une aire de stationnement, dans lequel on utilise des moyens électroniques reliés à un détecteur d'occupation (3,8,10,12) pour savoir si une place de stationnement (2) est occupée ou libre, **caractérisé en ce qu'**il comprend les étapes consistant à :
- utiliser au moins un deuxième détecteur (4,9,11,13) et à
- utiliser à la fois la mesure de ce deuxième détecteur (4,9,11,13) et celle du premier détecteur (3,8,10,12) pour améliorer la fiabilité de la détection.

2. Procédé selon la revendication 1, dans lequel un signal d'occupation est émis par les moyens électroniques lorsque les mesures des premier (3,8,10,12) et deuxième détecteurs (4,9,11,13) sont toutes les deux positives.

3. Procédé selon la revendication 1, dans lequel les moyens électroniques combinent les mesures des premier (3,8,10,12) et deuxième (4,9,11,13) détecteurs pour décider d'émettre ou non un signal d'occupation.

4. Procédé selon l'une des revendications 1 à 3, dans lequel les premier et deuxième détecteurs (3,8,10,12;4,9,11,13) effectuent leurs mesures simultanément.

5. Procédé selon l'une des revendications 1 à 3, dans lequel les premier et deuxième détecteurs (3,8,10,12;4,9,11,13) effectuent leurs mesures à tour de rôle.

6. Procédé selon l'une des revendications 1 à 5, dans lequel les mesures sont continues.

7. Procédé selon l'une des revendications 1 à 5, dans lequel les mesures sont discontinues.

8. Système de gestion d'une aire de stationnement, comprenant des détecteurs d'occupation (3,8,10,12) dont chacun est associé à une place de stationnement (2) et connecté à des moyens électroniques, **caractérisé en ce qu'**il comprend en outre des deuxièmes détecteurs d'occupation (4,9,11,13) associés chacun à une place de stationnement (2) déjà surveillée par un premier détecteur d'occupation (3,8,10,12), ces deuxième détecteurs d'occupation (4,9,11,13) étant également reliés auxdits moyens électroniques et ces moyens électroniques étant aptes à utiliser à la fois les mesures des premiers détecteurs (3,8,10,12) et celles des deuxièmes détecteurs (4,9,11,13) pour améliorer la fiabilité des détections.

9. Système selon la revendication 8, dans lequel chaque premier détecteur (3,8,10,12) balaie une première zone (6,15) d'une place de stationnement (2) et chaque deuxième détecteur (4,9,11,13) balaie une deuxième zone (7,16) de la même place de stationnement (2), cette deuxième zone étant différente de la première zone.

10. Système selon la revendication 9, dans lequel les zones de balayage des premier (3,8,10,12) et deuxième détecteurs (4,9,11,13) sont des plages angulaires (α,β), tronconiques ou coniques.

11. Système selon la revendication 10, dans lequel lesdites plages angulaires (α,β) sont complémentaires.

12. Système selon la revendication 11, dans lequel les plages angulaires (α,β) sont comprises entre 20 et 70 degrés, de préférence entre 30 et 60 degrés.

13. Système selon la revendication 12, dans lequel l'aire de stationnement est couverte et les premiers et deuxièmes détecteurs (3,8,101,12;4,9,11,13) sont situés au-dessus de la place de stationnement (2) qu'ils surveillent.

14. Système selon l'une des revendications 7 à 12, dans lequel l'aire de stationnement est à ciel ouvert et les premiers et deuxièmes détecteurs sont disposés sur le sol ou dans le sol, totalement ou partiellement.

15. Système selon l'une des revendications 8 à 14, comprenant des détecteurs à plage de balayage variable en position et/ou dimension et/ou des détecteurs mobiles ayant des mouvements continus ou intermittents et/ou des haut-parleurs et/ou un système de paiement et/ou un système de guidage des véhicules.
